(19)

**Europäisches Patentamt**
**European Patent Office**
**Office européen des brevets**

(11) **EP 4 290 693 B1**

(12) **EUROPEAN PATENT SPECIFICATION**

(45) Date of publication and mention
of the grant of the patent:
**08.10.2025  Bulletin 2025/41**

(51) International Patent Classification (IPC):
**H01Q 1/52** *(2006.01)*    **H01Q 1/24** *(2006.01)*
**H01Q 1/22** *(2006.01)*    **H01Q 21/28** *(2006.01)*

(21) Application number: **22868979.0**

(22) Date of filing: **23.08.2022**

(52) Cooperative Patent Classification (CPC):
**H01Q 1/243; H01Q 1/2266; H01Q 1/2291;**
**H01Q 1/521; H01Q 21/28;** Y02D 30/70

(86) International application number:
**PCT/CN2022/114297**

(87) International publication number:
**WO 2023/040605 (23.03.2023 Gazette 2023/12)**

(54) **WI-FI AND BLUETOOTH COMBINED ANTENNA DEVICE AND CONFIGURATION METHOD THEREFOR, AND TERMINAL DEVICE**

KOMBINIERTE WIFI- UND BLUETOOTH-ANTENNENVORRICHTUNG UND
KONFIGURATIONSVERFAHREN DAFÜR SOWIE ENDGERÄTEVORRICHTUNG

DISPOSITIF D'ANTENNE COMBINÉ WI-FI ET BLUETOOTH ET SON PROCÉDÉ DE
CONFIGURATION, ET DISPOSITIF TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2021  CN 202111091425**

(43) Date of publication of application:
**13.12.2023  Bulletin 2023/50**

(73) Proprietor: **Honor Device Co., Ltd.**
**Shenzhen, Guangdong 518040 (CN)**

(72) Inventors:
  • **GUAN, Qiao**
    **Shenzhen, Guangdong 518040 (CN)**
  • **WANG, Yi**
    **Shenzhen, Guangdong 518040 (CN)**
  • **WEI, Kunpeng**
    **Shenzhen, Guangdong 518040 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
  **CN-A- 103 326 122      CN-A- 108 140 940**
  **CN-A- 113 851 836      CN-U- 211 017 410**
  **JP-A- 2006 229 528     KR-A- 20100 122 803**
  **US-A1- 2008 007 468    US-A1- 2009 027 286**
  **US-A1- 2016 301 145**

  • **MOONGILAN D ED - INSTITUTE OF
    ELECTRICAL AND ELECTRONICS ENGINEERS:
    "Image and return current modeling of PCB
    traces for radiated emissions", 2001 IEEE
    INTERNATIONAL SYMPOSIUM ON
    ELECTROMAGNETIC COMPATIBILITY. EMC.
    SYMPOSIUM RECORD. MONTREAL, CANADA,
    AUG. 13 - 17, 2001; [INTERNATIONL SYMPOSIUM
    ON ELECTROMAGNETIC COMPATIBILITY], NEW
    YORK, NY : IEEE, US, vol. 2, 13 August 2001
    (2001-08-13), pages 927 - 932, XP010557343,
    ISBN: 978-0-7803-6569-8, DOI: 10.1109/
    ISEMC.2001.950510**

EP 4 290 693 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application claims priority to Chinese Patent Application NO. 202111091425.4, filed with the China National Intellectual Property Administration on September 17, 2021 and entitled "WI-FI AND BLUETOOTH COMBINED ANTENNA APPARATUS AND CONFIGURATION METHOD THEREFOR, AND TERMINAL DEVICE".

## TECHNICAL FIELD

This application belongs to the field of communication technologies, and in particular, relates to a Wi-Fi and Bluetooth combined antenna apparatus and a configuration method therefor, and a terminal device.

## BACKGROUND

An existing terminal device such as a tablet or a mobile phone is often equipped with a Wi-Fi antenna and a Bluetooth antenna. However, the Wi-Fi antenna and the Bluetooth antenna generally work in a same frequency band, and when a Wi-Fi module and a Bluetooth module share an antenna, it is a time division strategy, which leads to a sharp decline in performance of the Wi-Fi module when the Bluetooth module works.
US 2016/301145 A1 describes an antenna apparatus that includes a substrate, a first antenna pattern extending from the substrate in a lateral direction and configured to transmit and receive first communications signals, and a second antenna pattern spaced apart from the first antenna pattern, extending from the substrate in another lateral direction, and configured to transmit and receive second communications signals. The antenna apparatus may further include a first isolator extending from the substrate in the lateral direction and adjacent to the first antenna pattern or the second antenna pattern.
US 2009/027286 A1 describes an antenna apparatus comprising: a substrate comprising an end portion; antenna elements connected to the end portion through a connecting portion; and a conductive line path provided between adjacent antenna elements, both ends of the conductive line path connected to the end portion. A distance between both ends of the conductive line path is shorter than a quarter wavelength of an operating frequency of the antenna elements.
US 2008/007468 A1 describes a conductor that is mounted on a circuit board parallel to its side along which a radiation of a radio frequency signal is generated. The proximal end of the L-shaped conductor is electrically connected to a ground pattern formed on the rear surface of a circuit board 1, and the distal end of the L-shaped conductor is open.

## SUMMARY

An objective of the invention is to provide a Wi-Fi and Bluetooth combined antenna apparatus and a configuration method therefor, and a terminal device, which can improve isolation between a Wi-Fi antenna and a Bluetooth antenna, so that the Bluetooth antenna and the Wi-Fi antenna have better working performance when simultaneously working in a same frequency band. This object is solved by the subject-matter of the independent claims, wherein further embodiments are set out in the dependent claims.

To achieve the foregoing objective, technical solutions used in this application are as follows.

According to a first aspect, a Wi-Fi and Bluetooth combined antenna apparatus is provided, including:

 a Wi-Fi antenna;
 a ground plate, where the Wi-Fi antenna is disposed at an edge of the ground plate and can generate a ground plate current on the ground plate;
 a perturbation unit, where the perturbation unit is disposed at an edge of the ground plate and is configured to generate a reverse current whose direction is opposite to an incoming wave direction of the ground plate current after being excited by the ground plate current, and a current zero point area is formed on the ground plate after the reverse current is superimposed with the ground plate current; and
 a Bluetooth antenna, where the Bluetooth antenna is disposed at a position of the edge of the ground plate corresponding to the current zero point area.

In this way, the Wi-Fi and Bluetooth combined antenna apparatus includes the perturbation unit, and when the Wi-Fi antenna generates the ground plate current on the ground plate, the perturbation unit can generate the reverse current whose direction is opposite to the incoming wave direction of the ground plate current after being excited by the ground plate current, so that the reverse current is superimposed with the ground plate current and the current zero point area can be formed on the ground plate, and then the Bluetooth antenna is disposed at a position of the edge of the ground plate corresponding to the current zero point area, which better reduces an impact of the ground plate current on the Bluetooth antenna, better improves isolation between the Bluetooth antenna and the Wi-Fi antenna, and better implements decoupling when the Bluetooth antenna and the Wi-Fi antenna simultaneously work in a same working frequency band, so that the Bluetooth antenna and the Wi-Fi antenna have better working performance when simultaneously working in a same frequency band.

The Wi-Fi antenna and the perturbation unit are respectively disposed at two opposite corner positions of the ground plate. Exemplarily, the Wi-Fi antenna and the perturbation unit may be respectively disposed at two ends of a same side edge of the ground plate. Alternatively, the Wi-Fi antenna and the perturbation unit may be respectively disposed at two adjacent side edges of the ground plate. For example, the Wi-Fi antenna may be placed on a long side of the ground plate, while the perturbation unit may be placed on a short side of the ground plate.

Optionally, there are two perturbation units, the two perturbation units are disposed diagonally at two corner positions of the ground plate relative to a center of the ground plate, and the Wi-Fi antenna is disposed at another corner position of the ground plate. Exemplarily, the two perturbation units may be respectively placed on two opposite long sides of the ground plate, or may be respectively placed on adjacent long and short sides of the ground plate, that is, the two perturbation units may be placed in parallel or orthogonally.

Optionally, resonant frequencies of two perturbation units are the same.

Optionally, resonant frequencies of resonant frequencies of two perturbation units are different, and a difference between the resonant frequencies of resonant frequencies of the two perturbation units is greater than 0 MHz and less than or equal to 100 MHz.

The perturbation unit includes a radiator, a connecting portion, and a resistor-capacitor matching network, the radiator is connected to the ground plate through the connecting portion, and the resistor-capacitor matching network is connected to an open end of the radiator and is used for outputting the reverse current to the ground plate. When the resonant frequencies of the two perturbation units are the same, resistor-capacitor matching networks have a same equivalent capacitance (for example, both are 0.3 pF). However, when the resonant frequencies of the two perturbation units are the same, the resistor-capacitor matching networks have different equivalent capacitances (for example, 0.3 pF and 0.35 pF respectively).

Optionally, the connecting portion and the radiator are integrally formed; or
the connecting portion is a metal spring plate, one end of the metal spring plate is welded to the radiator, and the other end of the metal spring plate is welded to the ground plate.

Optionally, a length, a thickness, and a clearance of the radiator satisfy the following relationships:

$$10 \text{ mm} \leq L \leq 18 \text{ mm};$$

$$0.8 \text{ mm} \leq C \leq 1.2 \text{ mm};$$

and

$$0.8 \text{ mm} \leq D \leq 1.2 \text{ mm},$$

where L represents the length of the radiator, C represents the thickness of the radiator, and D represents the clearance of the radiator.

According to a second aspect, a configuration method for a Wi-Fi and Bluetooth combined antenna apparatus is provided, including the following steps:

providing a Wi-Fi antenna and a ground plate, and disposing the Wi-Fi antenna at an edge of the ground plate;
providing a perturbation unit, and disposing the perturbation unit at an edge of the ground plate, to enable the perturbation unit and the Wi-Fi antenna to be disposed opposite to each other;
obtaining a position of a current zero point area formed on the ground plate after a ground plate current generated on the ground plate by the Wi-Fi antenna is superimposed with a reverse current generated on the perturbation unit by the ground plane current; and
providing a Bluetooth antenna, and disposing the Bluetooth antenna at a position of the edge of the ground plate corresponding to the current zero point area.

According to the configuration method for the Wi-Fi and Bluetooth combined antenna apparatus provided in this embodiment of this application, the perturbation unit is disposed at the edge of the ground plate, and the perturbation unit and the Wi-Fi antenna are enabled to be disposed opposite to each other, so that when the Wi-Fi antenna generates the ground plate current on the ground plate, the perturbation unit can generate the reverse current whose direction is opposite to an incoming wave direction of the ground plate current after being excited by the ground plate current, so that the reverse current is superimposed with the ground plate current and the current zero point area can be formed on the ground plate, and then the Bluetooth antenna is disposed at the position of the edge of the ground plate corresponding to the current zero point area, which better reduces an impact of the ground plate current on the Bluetooth antenna, better improves isolation between the Bluetooth antenna and the Wi-Fi antenna, and better implements decoupling when the Bluetooth antenna and the Wi-Fi antenna simultaneously work in a same working frequency band, so that the Bluetooth antenna and the Wi-Fi antenna have better working performance when simultaneously working in a same frequency band.

According to a third aspect, a terminal device is provided, including the foregoing Wi-Fi and Bluetooth combined antenna apparatus.

The terminal device provided in this embodiment of this application includes the foregoing Wi-Fi and Bluetooth combined antenna apparatus, and the foregoing Wi-Fi and Bluetooth combined antenna apparatus implements, through a perturbation unit disposed therein, decoupling when a Bluetooth antenna and a Wi-Fi antenna simultaneously work in a same working frequency band, so that the Bluetooth antenna and the Wi-Fi antenna have better isolation and can have better working performance when simultaneously working in a same frequency band. In this way, when the terminal device is connected to a Wi-Fi network and is simultaneously connected to an external device by using the Bluetooth antenna, that the Bluetooth antenna and the Wi-Fi antenna do not affect each other can also be satisfied, so that a user of the terminal device has better user product experience.

## BRIEF DESCRIPTION OF DRAWINGS

To describe the technical solutions in the embodiments of this application, the following briefly describes the accompanying drawings required for describing the embodiments or the prior art. Apparently, the accompanying drawings in the following description show merely some embodiments of this application, and a person of ordinary skill in the art may still derive other drawings from these accompanying drawings without creative efforts.

FIG. 1 is a schematic structural diagram 1 of a Wi-Fi and Bluetooth combined antenna apparatus according to an embodiment of this application;
FIG. 2 is a schematic structural diagram 2 of a Wi-Fi and Bluetooth combined antenna apparatus according to an embodiment of this application;
FIG. 3 is a schematic structural diagram 3 of a Wi-Fi and Bluetooth combined antenna apparatus according to an embodiment of this application;
FIG. 4 is a schematic structural diagram 4 of a Wi-Fi and Bluetooth combined antenna apparatus according to an embodiment of this application;
FIG. 5 is a schematic structural diagram of a perturbation unit of a Wi-Fi and Bluetooth combined antenna apparatus according to an embodiment of this application;
FIG. 6 is a ground plate current distribution diagram of a ground plate of a Wi-Fi and Bluetooth combined antenna apparatus according to an embodiment of this application;
FIG. 7 is a curve graph 1 illustrating an S parameter of a Wi-Fi and Bluetooth combined antenna apparatus changing with a frequency according to an embodiment of this application;
FIG. 8 is a curve graph 2 illustrating an S parameter of a Wi-Fi and Bluetooth combined antenna apparatus changing with a frequency according to an embodiment of this application;
FIG. 9 is a curve graph 3 illustrating an S parameter of a Wi-Fi and Bluetooth combined antenna apparatus changing with a frequency according to an embodiment of this application;
FIG. 10 is a curve graph 4 illustrating an S parameter of a Wi-Fi and Bluetooth combined antenna apparatus changing with a frequency according to an embodiment of this application;
FIG. 11 is a curve graph 5 illustrating an S parameter of a Wi-Fi and Bluetooth combined antenna apparatus changing with a frequency according to an embodiment of this application;
FIG. 12 is a curve graph 6 illustrating an S parameter of a Wi-Fi and Bluetooth combined antenna apparatus changing with a frequency according to an embodiment of this application;
FIG. 13 is a distribution diagram of a characteristic mode current size point of a ground plate of a Wi-Fi and Bluetooth combined antenna apparatus according to an embodiment of this application;
FIG. 14 is a distribution diagram of collection of a characteristic mode current size point of a ground plate of a Wi-Fi and Bluetooth combined antenna apparatus according to an embodiment of this application; and
FIG. 15 is a flowchart of steps of a configuration method for a Wi-Fi and Bluetooth combined antenna apparatus according to an embodiment of this application.

Reference Numerals in the accompanying drawings:

10: Wi-Fi antenna; 20: Ground plate; 30: Perturbation unit;
40: Bluetooth antenna; 50: Stylus; 31: Radiator;
32: Resistor-capacitor matching network; and 33: Connecting portion.

## DESCRIPTION OF EMBODIMENTS

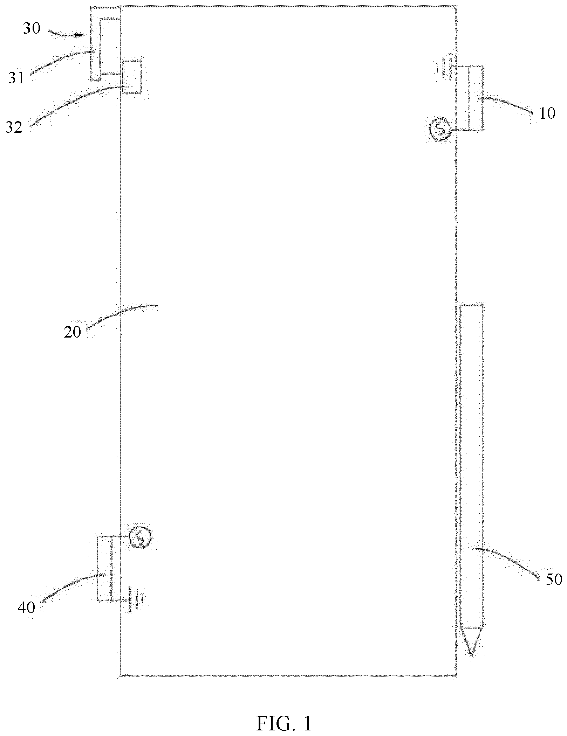

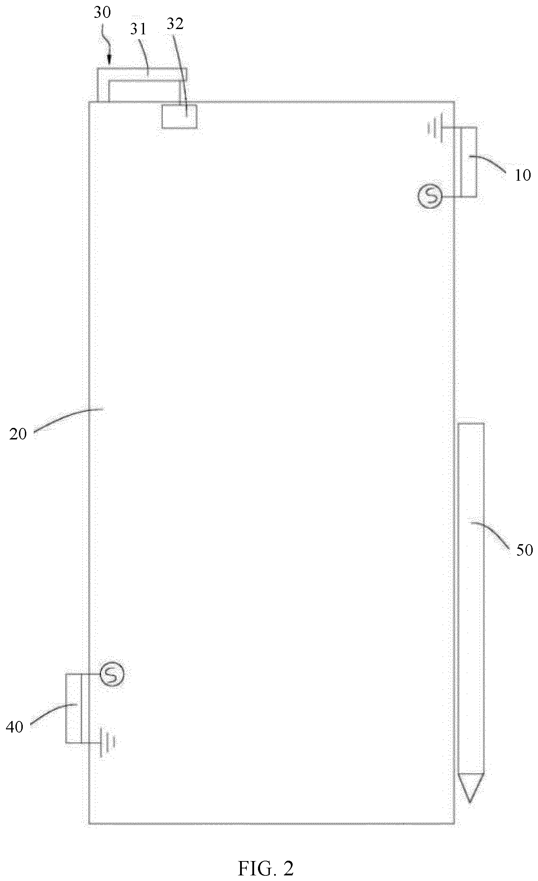

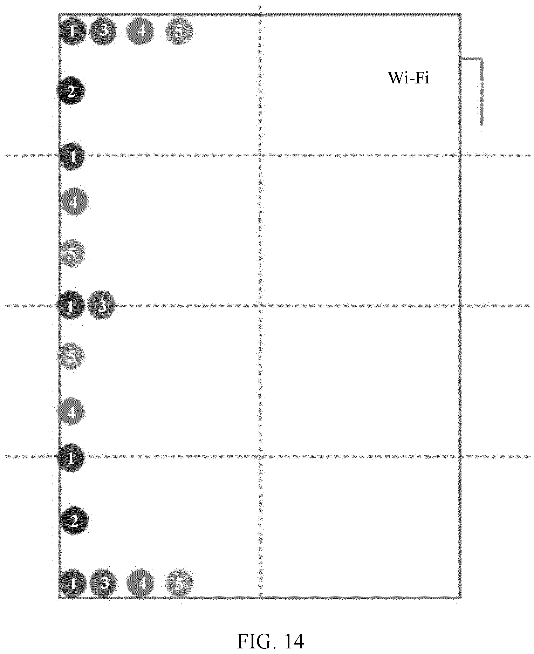

The embodiments of this application are described in detail below, examples of the embodiments are shown in the accompanying drawings, where same or similar elements or elements having same or similar functions are denoted by same or similar reference numerals throughout the description. The following embodiments described with reference to FIG. 1 to FIG. 15 are exemplary, which are intended to interpret this application and cannot be construed as limiting this application.
In the description of this application, it should be understood that orientation or position relationships indicated by the terms such as "length", "width", "upper", "lower", "front", "rear", "left", "right", "vertical", "horizontal", "top", "bottom", "inside", and "outside" are based on orientations or position relationships shown in the accompanying drawings, and are used merely for ease of describing this application and simplifying the description, instead of indicating or implying that the mentioned apparatus or element must have a particular orientation or must be constructed and operated in a particular orientation, and therefore cannot be construed as limiting this application.
In addition, the terms "first" and "second" are used merely for the purpose of description, and shall not be construed as indicating or implying relative importance or implying a quantity of indicated technical features. Therefore, a feature defining "first" or "second" may explicitly or implicitly include one or more of the feature. In the description of this application, unless otherwise specifically defined, "a plurality of" means two or more than two.

In this application, unless otherwise explicitly specified or defined, the terms "mounted", "connected", "connection", "fixed" and the like are to be understood broadly. For example, the connection may be a fixed connection, a detachable connection, or an integral connection; or the connection may be a mechanical connection or an electrical connection; or the connection may be a direct connection, an indirect connection through an intermediate medium, or internal communication between two elements or an interaction relationship between two elements. A person of ordinary skill in the art may understand specific meanings of the foregoing terms in this application according to a specific situation.

The following further explains proper terms that appear in the embodiments of this application.

Wi-Fi, translated into Chinese as mobile hotspot or wireless network, is a wireless local area network technology created in accordance with the IEEE 802.11 standard.

Bluetooth (BT, Bluetooth) is a global specification for the openness of wireless data and voice communication, which is based on a low-cost close-range wireless connection, and is a special close-range wireless technology connection for establishing a communication environment for a stationary device and a mobile device.

Isolation, where a coupling loss between transceiver antennas of different systems is greater than a minimum threshold for generating interference between the systems, and the coupling loss is the isolation.

An existing terminal device such as a tablet or a mobile phone is often equipped with a Wi-Fi antenna and a Bluetooth antenna. However, the Wi-Fi antenna and the Bluetooth antenna generally work in a same frequency band, and when a Wi-Fi module and a Bluetooth module share an antenna, it is a time division strategy, which leads to a sharp decline in performance of the Wi-Fi module when the Bluetooth module works.

Therefore, the embodiments of this application provide a Wi-Fi and Bluetooth combined antenna apparatus, a configuration method therefor, and a terminal device, which can improve isolation between the Wi-Fi antenna and the Bluetooth antenna, so that the Bluetooth antenna and the Wi-Fi antenna have better working performance when simultaneously working in a same frequency band.

In the embodiments, the terminal device may be a tablet computer, a notebook computer, a mobile phone, or the like.

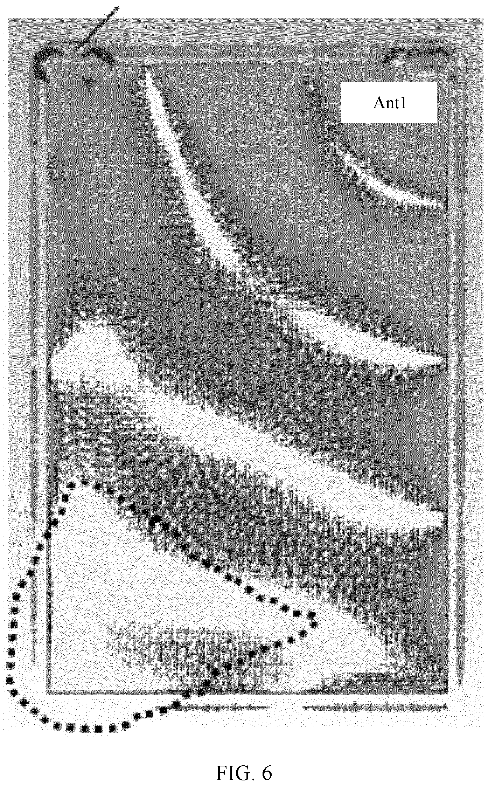

According to a first aspect, referring to FIG. 1 to FIG. 3, an embodiment of this application provides a Wi-Fi and Bluetooth combined antenna apparatus, which includes a Wi-Fi antenna 10, a ground plate 20, a perturbation unit 30, and a Bluetooth antenna 40. The Wi-Fi antenna 10 is disposed at an edge of the ground plate 20 and can generate a ground plate 20 current on the ground plate 20. The perturbation unit 30 is disposed at an edge of the ground plate 20, and is configured to generate a reverse current whose direction is opposite to an incoming wave direction of the ground plate 20 current after being excited by the ground plate 20 current, and a current zero point area is formed on the ground plate 20 after the reverse current is superimposed with the ground plate 20 current. The Bluetooth antenna 40 is disposed at a position of the edge of the ground plate 20 corresponding to the current zero point area (as shown in a dotted line box in FIG. 6).

Exemplarily, the Wi-Fi antenna 10 may be a left-handed antenna, a length of a radiation body of the Wi-Fi antenna 10 may be 15 mm, a thickness thereof may be 1 mm, and an antenna clearance may be 1 mm.

Exemplarily, a length and width dimension of the ground plate 20 may be 245 mm/155 mm, or may be 155 mm/80 mm, 245 mm/200 mm, or the like.

The Wi-Fi and Bluetooth combined antenna apparatus provided in this embodiment of this application is further described below. According to the Wi-Fi and Bluetooth combined antenna apparatus provided in this embodiment of this application, the Wi-Fi and Bluetooth combined antenna apparatus includes the perturbation unit 30, and when the Wi-Fi antenna 10 generates the ground plate current on the ground plate 20, the perturbation unit 30 can generate the reverse current whose direction is opposite to the incoming wave direction of the ground plate current after being excited by the ground plate current, so that the reverse current is superimposed with the ground plate current and the current zero point area can be formed on the ground plate, and then the Bluetooth antenna 40 is disposed at the position of the edge of the ground plate 20 corresponding to the current zero point area, which better reduces an impact of the ground plate current on the Bluetooth antenna 40, better improves isolation between the Bluetooth antenna 40 and the Wi-Fi antenna 10, and better implements decoupling when the Bluetooth antenna 40 and the Wi-Fi antenna 10 simultaneously work in a same working frequency band, so that the Bluetooth antenna 40 and the Wi-Fi antenna 10 have better working performance when simultaneously working in a same frequency band, and the Wi-Fi and Bluetooth combined antenna apparatus is suitable for a terminal device with a metal back cover.

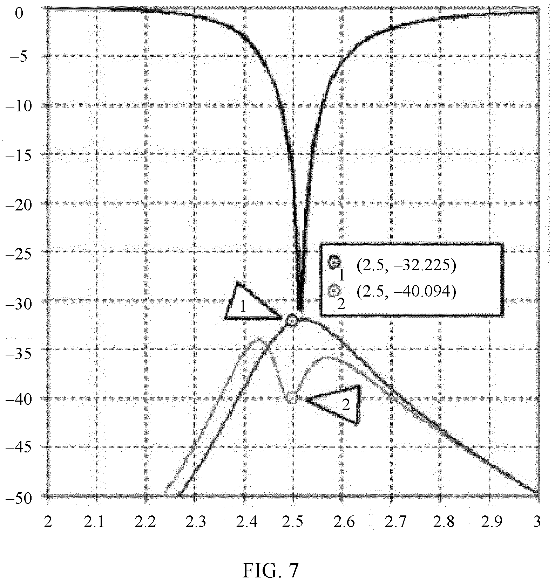

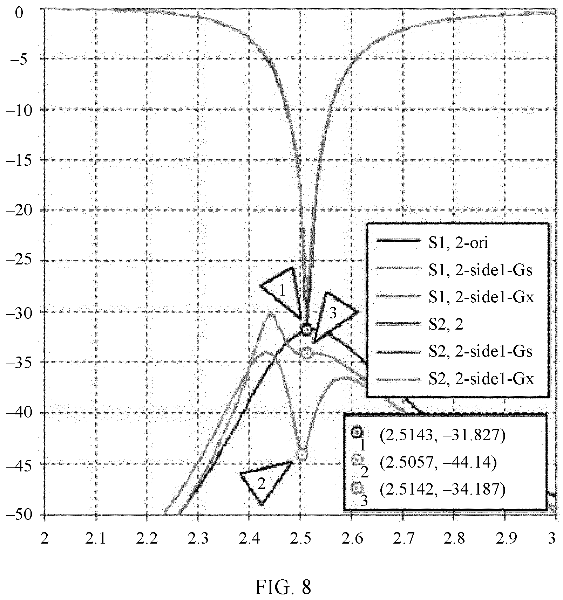

Exemplarily, as shown in FIG. 7 and FIG. 8, comparing a Wi-Fi and Bluetooth combined antenna apparatus to which the perturbation unit 30 is not added and a Wi-Fi and Bluetooth combined antenna apparatus to which the perturbation unit 30 is added (a curve labeled 1 in FIG. 7 represents a curve graph illustrating an S parameter of the Wi-Fi and Bluetooth combined antenna apparatus to which the perturbation unit 30 is not added changing with a frequency, and a curve labeled 2 in Figure 7 represents a curve graph illustrating an S parameter of the Wi-Fi and Bluetooth combined antenna apparatus to which the perturbation unit 30 is added changing with a frequency), there is no obvious pit in a curve S11 of the Wi-Fi antenna 10, radiation efficiency of the Wi-Fi antenna 10 is not deteriorated significantly, and in a transmission curve S12 of the Wi-Fi antenna 10, an isolation zero point (S12 pit) appears and isolation exceeds 40 dB, which is significantly improved (a peak value of the isolation is increased by 8 dB to 12 dB, and an average value is increased by around 6 dB).

In some other embodiments of this application, as shown in FIG. 1 to FIG. 3, the Wi-Fi antenna 10 and the perturbation unit 30 are respectively disposed at two opposite corner positions of the ground plate 20. Specifically, by respectively disposing the Wi-Fi antenna 10 and the perturbation unit 30 at the two opposite corner positions of the ground plate 20, an impact of the perturbation unit 30 on the Wi-Fi antenna 10 can be reduced, so that the Wi-Fi antenna 10 with the presence of the perturbation unit 30 can also have better working performance such as bandwidth performance, transmission efficiency, transmission directivity, and two-handed mode performance.

Exemplarily, the Wi-Fi antenna 10 and the perturbation unit 30 may be respectively disposed at two ends of a same side edge of the ground plate. Alternatively, the Wi-Fi antenna 10 and the perturbation unit 30 may be respectively disposed at adjacent side edges of the ground plate. For example, the Wi-Fi antenna 10 may be placed on a long side of the ground plate 20, while the perturbation unit 30 can be placed on a short side of the ground plate 20.

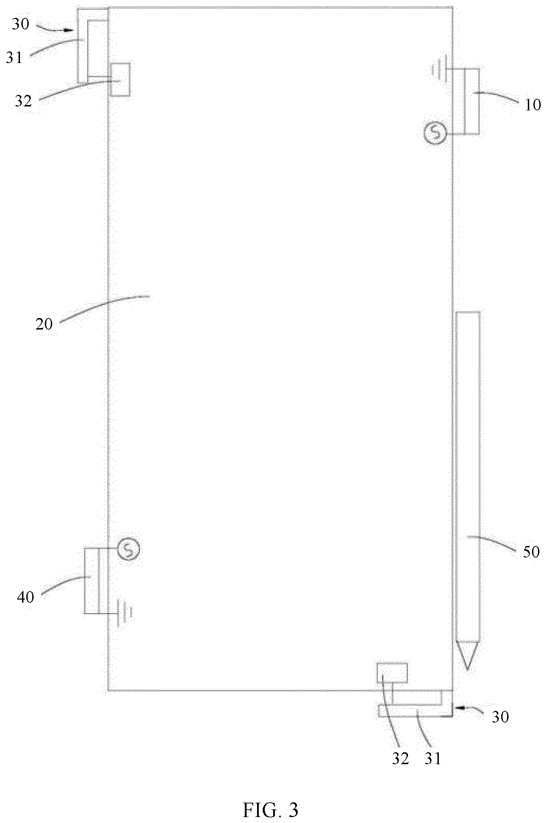

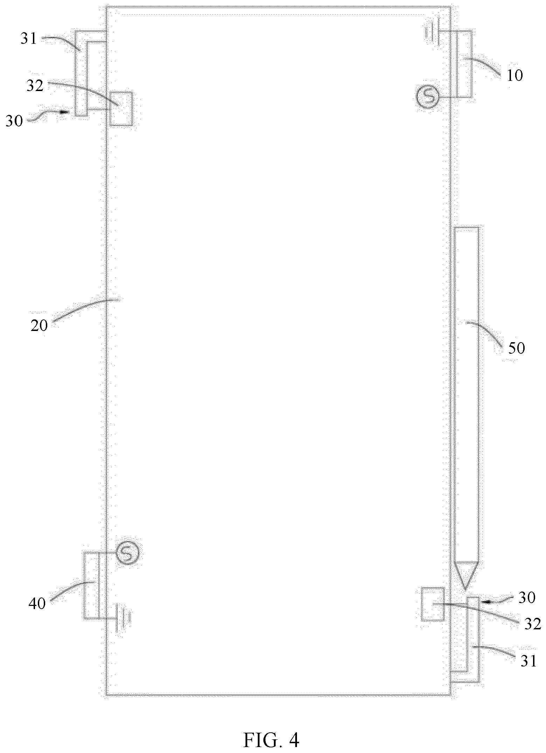

In some other embodiments of this application, as shown in FIG. 3 and FIG. 4, there are two perturbation units 30, the two perturbation units 30 are disposed diagonally at two corner positions of the ground plate 20 relative to a center of the ground plate 20, and the Wi-Fi antenna 10 is disposed at another corner position of the ground plate 20.

Specifically, by setting that there are two perturbation units 30, reverse currents generated by the two perturbation units 30 are superimposed with the ground plate current generated by the Wi-Fi antenna 10, through which the ground plate current generated by the Wi-Fi antenna 10 can be better offset, so that the Bluetooth antenna 40 is less affected by the ground plate current, so that there is better isolation between the Bluetooth antenna 40 and the Wi-Fi antenna 10.

Exemplarily, the two perturbation units 30 may be respectively placed on two opposite long sides of the ground plate 20, or may be respectively placed on adjacent long and short sides of the ground plate 20, that is, the two perturbation units 30 may be placed in parallel or orthogonally.

In some other embodiments of this application, resonant frequencies of the two perturbation units 30 may be the same or different. When the resonant frequencies of the two perturbation units 30 are different, a difference between the resonant frequencies of resonant frequencies of the two perturbation units 30 is greater than 0 MHz and less than or equal to 100 MHz. In this way, the ground plate current generated by the Wi-Fi antenna 10 can be better offset, so that there is better isolation between the Bluetooth antenna 40 and the Wi-Fi antenna 10.

Exemplarily, as shown in FIG. 8, when the two perturbation units 30 are disposed in parallel and the resonant frequencies are the same, the peak value of the isolation is increased by 10 dB (a curve labeled 1 in FIG. 8 represents a curve graph illustrating the S parameter of the Wi-Fi and Bluetooth combined antenna apparatus to which the perturbation unit 30 is not added changing with the frequency, a curve labeled 3 in FIG. 8 represents a curve graph illustrating the S parameter of the Wi-Fi and Bluetooth combined antenna apparatus to which two perturbation units 30 whose resonant frequencies are the same are added changing with the frequency, and a curve labeled 2 in FIG. 8 represents a curve graph illustrating the S parameter of the Wi-Fi and Bluetooth combined antenna apparatus to which two perturbation units 30 whose resonant frequencies are different are added changing with the frequency). When the two perturbation units 30 are disposed in parallel and the resonant frequencies are different, the peak value of the isolation is increased by 23 dB, and the average value is increased by 7 dB.

Exemplarily, as shown in FIG. 8, when the two perturbation units 30 are disposed in parallel and the resonant frequencies are the same, the peak value of the isolation is increased by 10 dB (a curve labeled 1 in FIG. 8 represents a curve graph illustrating the S parameter of the Wi-Fi and Bluetooth combined antenna apparatus to which the perturbation unit 30 is not added changing with the frequency, a curve labeled 3 in FIG. 8 represents a curve graph illustrating the S parameter of the Wi-Fi and Bluetooth combined antenna apparatus to which two perturbation units 30 whose resonant frequencies are the same are added changing with the frequency, and a curve labeled 2 in FIG. 8 represents a curve graph illustrating the S parameter of the Wi-Fi and Bluetooth combined antenna apparatus to which two perturbation units 30 whose resonant frequencies are different are added changing with the frequency). When the two perturbation units 30 are disposed in parallel and the resonant frequencies are different, the peak value of the isolation is increased by 23 dB, and the average value is increased by 7 dB.

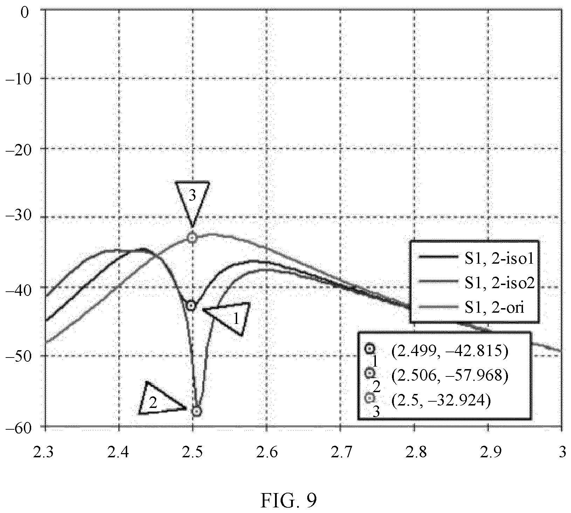

Exemplarily, as shown in FIG. 9, when the two perturbation units 30 are orthogonally disposed and the resonant frequencies are the same, the peak value of the isolation is increased by 8 dB to 12 dB (a curve labeled 1 in FIG. 9 represents a curve graph illustrating the S parameter of the Wi-Fi and Bluetooth combined antenna apparatus to which the perturbation unit 30 is not added changing with the frequency, a curve labeled 3 in FIG. 9 represents a curve graph illustrating the S parameter of the Wi-Fi and Bluetooth combined antenna apparatus to which two perturbation units 30 whose resonant frequencies are the same are added changes with the frequency, and a curve labeled 2 in FIG. 9 represents a curve graph illustrating the S parameter of the Wi-Fi and Bluetooth combined antenna apparatus to which two perturbation units 30 whose resonant frequencies are different are added changing with the frequency). When the two perturbation units 30 are orthogonally disposed and the resonant frequencies are different, the peak value of the isolation is increased by 19 dB to 24 dB, and the average value is increased by 5 dB to 7 dB.

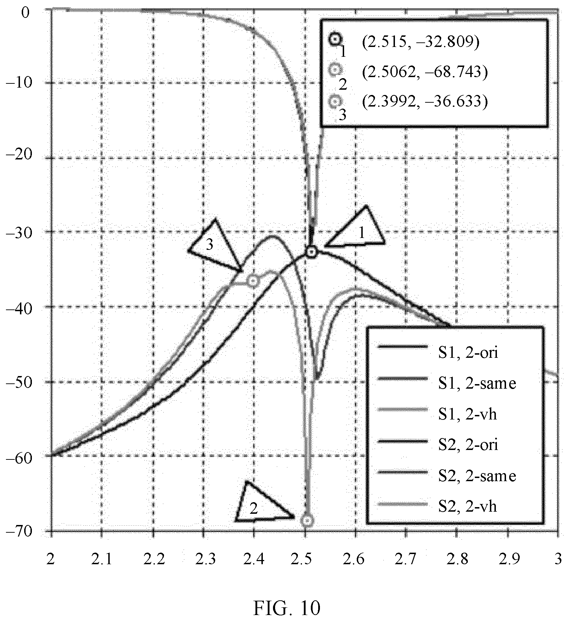

Exemplarily, as shown in FIG. 10, when the two perturbation units 30 are orthogonally disposed and the resonant frequencies are different, the peak value of the isolation is increased by 36 dB and the average value is increased by 10 dB. However, directivity of the Wi-Fi antenna 10 changes only from 3.7 dBi to 3.8 dBi. Therefore, it can be learned that an impact of the presence of the two perturbation units 30 on the Wi-Fi antenna 10 is basically negligible.

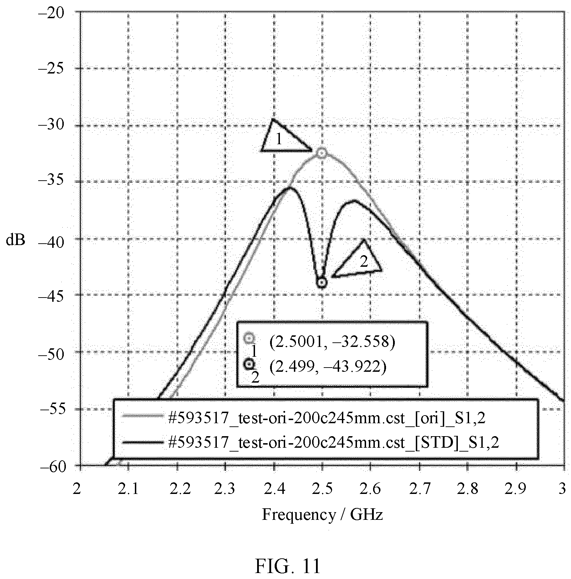

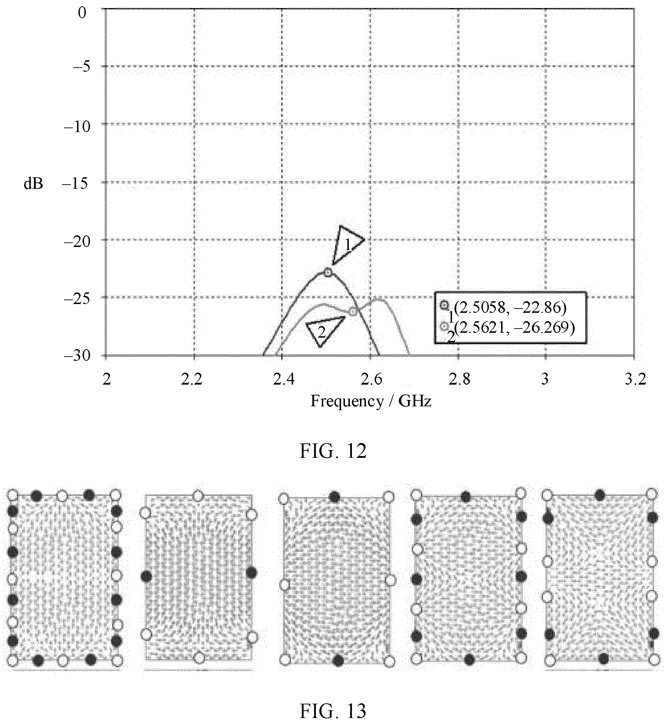

Exemplarily, as shown in FIG. 11 and FIG. 12, when the length and width dimension of the ground plate 20 is 245 mm/200 mm, a result shows that the peak value of the isolation may be increased by 10 dB (as shown in FIG. 11). When the length and width dimension of the ground plate 20 is 155 mm/80 mm, a result shows that an independent Bluetooth is placed at the position of the zero point area formed by the Wi-Fi antenna and the perturbation unit, and the peak value of the isolation may be increased by 3.5 dB (as shown in FIG. 12).

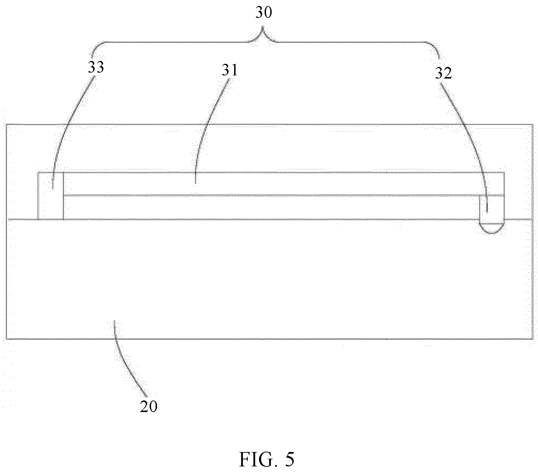

In some other embodiments of this application, as shown in FIG. 5, the perturbation unit 30 includes a radiator 31, a connecting portion 33, and a resistor-capacitor matching network 32. The radiator 31 is connected to the ground plate 20 through the connecting portion 33, and the resistor-capacitor matching network 32 is connected to an open end of the radiator 31 and is used for outputting the reverse current to the ground plate 20.

Specifically, the open end of the radiator 31 face a direction of the ground plate, which enables the resistor-capacitor matching network 32 to better output the reverse current to the ground plate 20. More specifically, the resistor-capacitor matching network 32 is a centralized element including a resistor and a capacitor or further including a switch.

Exemplarily, when the resonant frequencies of the two perturbation units 30 are the same, the resistor-capacitor matching networks 32 have a same equivalent capacitance (for example, both are 0.3 pF). When the resonant frequencies of the two perturbation units 30 are the same, the resistor-capacitor matching networks 32 have different equivalent capacitances (for example, 0.3 pF and 0.35 pF respectively).

Exemplarily, as shown in FIG. 13 to FIG. 14, when the Wi-Fi antenna 10 is in a different frequency band, a zero point distribution position of the ground plate current at the edge of the ground plate 20 may be marked, collected, and analyzed, to obtain an ideal position for the perturbation unit 30 to be placed at the edge of the ground plate 20.

In some other embodiments of this application, the connecting portion 33 and the radiator 31 are integrally formed. Specifically, by integrally forming the connecting portion 33 and the radiator 31, overall structural strength of the perturbation unit 30 can be improved, so that a connection position between the connecting portion 33 and the radiator 31 is not prone to cracking, which also improves working reliability of the perturbation unit 30.

Exemplarily, the connecting portion 33 and the radiator 31 may be made in a molding manner such as integrated molding.

In some other embodiments of this application, the connecting portion 33 is a metal spring plate, one end of the metal spring plate is welded to the radiator 31, and the other end of the metal spring plate is welded to the ground plate 20. Specifically, by designing the connecting portion 33 as the metal spring plate, the connecting portion 33 also has better elastic buffering performance, so that when the perturbation unit 30 is affected by external shock vibration, the connecting portion 33 can also resolve an impact force on the perturbation unit 30 by elastic deformation, so that the perturbation unit 30 is not easy to be detached from the ground plate 20.

In some other embodiments of this application, a length, a thickness, and a clearance of the radiator 31 satisfy the following relationships:

$$10 \text{ mm} \le L \le 18 \text{ mm};$$

$$0.8 \text{ mm} \le C \le 1.2 \text{ mm};$$

and

$$0.8 \text{ mm} \le D \le 1.2 \text{ mm},$$

where L represents the length of the radiator 31, C represents the thickness of the radiator 31, and D represents the clearance of the radiator 31.

Specifically, by setting the length, the thickness, and the clearance of the radiator 31 within the foregoing limit ranges, the radiator 31 can smoothly generate the reverse current when being excited by the ground plate current, and in addition, when the perturbation unit 30 and a stylus 50 are both on a same side of the ground plate 20, it can be avoided that a placement space of the stylus 50 is occupied.

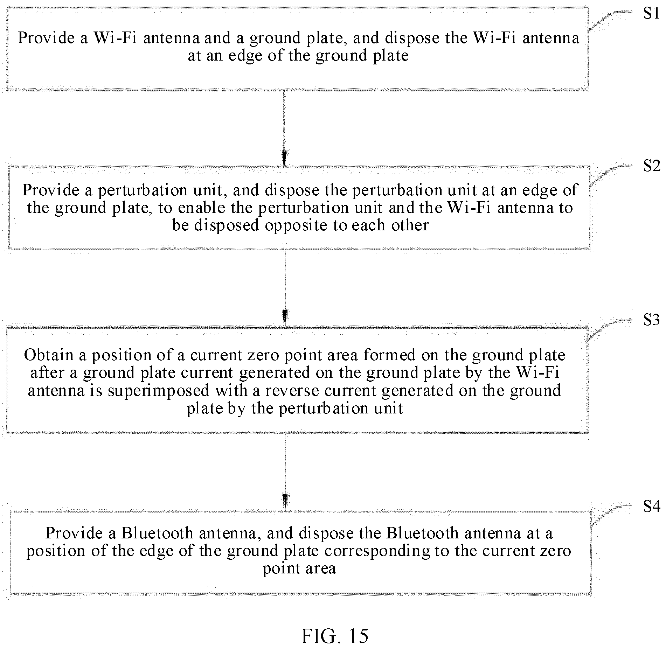

As shown in FIG. 15, according to a second aspect, an embodiment of this application further provides a configuration method for a Wi-Fi and Bluetooth combined antenna apparatus, including the following steps:

providing a Wi-Fi antenna 10 and a ground plate 20, and disposing the Wi-Fi antenna 10 at an edge of the ground plate 20;

providing a perturbation unit 30, and disposing the perturbation unit 30 at an edge of the ground plate 20, to enable the perturbation unit 30 and the Wi-Fi antenna 10 to be disposed opposite to each other;

obtaining a position of a current zero point area formed on the ground plate 20 after a ground plate 20 current generated on the ground plate 20 by the Wi-Fi antenna 10 is superimposed with a reverse current generated on the ground plate 20 by the perturbation unit 30; and

providing a Bluetooth antenna 40, and disposing the Bluetooth antenna 40 at a position of the edge of the ground plate 20 corresponding to the current zero point area.

Specifically, an order of the steps of the configuration method for the Wi-Fi and Bluetooth combined antenna apparatus may be as follows.

S1: Provide the Wi-Fi antenna 10 and the ground plate 20, and dispose the Wi-Fi antenna 10 at the edge of the ground plate 20.

S2: Provide the perturbation unit 30, and dispose the perturbation unit 30 at the edge of the ground plate 20, to enable the perturbation unit 30 and the Wi-Fi antenna 10 to be disposed opposite to each other.

S3: Obtain the position of the current zero point area formed on the ground plate 20 after the ground plate 20 current generated on the ground plate 20 by the Wi-Fi antenna 10 is superimposed with the reverse current generated on the ground plate 20 by the perturbation unit 30.

S4: Provide the Bluetooth antenna 40, and dispose the Bluetooth antenna 40 at the position of the edge of the ground plate 20 corresponding to the current zero point area.

According to the configuration method for the Wi-Fi and Bluetooth combined antenna apparatus provided in this embodiment of this application, the perturbation unit 30 is disposed at the edge of the ground plate 20, and the perturbation unit 30 and the Wi-Fi antenna 10 are enabled to be disposed opposite to each other, so that when the Wi-Fi antenna 10 generates the ground plate current on the ground plate 20, the perturbation unit 30 can generate the reverse current whose direction is opposite to an incoming wave direction of the ground plate current after being excited by the ground plate current, so that the reverse current is superimposed with the ground plate current and the current zero point area can be formed on the ground plate, and then the Bluetooth antenna 40 is disposed at the position of the edge of the ground plate 20 corresponding to the current zero point area, which better reduces an impact of the ground plate current on the Bluetooth antenna 40, better improves isolation between the Bluetooth antenna 40 and the Wi-Fi antenna 10, and better implements decoupling when the Bluetooth antenna 40 and the Wi-Fi antenna 10 simultaneously work in a same working frequency band, so that the Bluetooth antenna 40 and the Wi-Fi antenna 10 have better working performance when simultaneously working in a same frequency band.

According to a third aspect, an embodiment of this application provides a terminal device, including the foregoing Wi-Fi and Bluetooth combined antenna apparatus. The terminal device may be a tablet computer, a notebook computer, a mobile phone, or the like.

The terminal device provided in this embodiment of this application includes the foregoing Wi-Fi and Bluetooth combined antenna apparatus, and the foregoing Wi-Fi and Bluetooth combined antenna apparatus implements, through a perturbation unit 30 disposed therein, decoupling when a Bluetooth antenna 40 and a Wi-Fi antenna 10 simultaneously work in a same working frequency band, so that the Bluetooth antenna 40 and the Wi-Fi antenna 10 have better isolation and can have better working performance when simultaneously working in a same frequency band. In this way, when the terminal device is connected to a Wi-Fi network and is simultaneously connected to an external device such as a stylus 50 by using the Bluetooth antenna 40, that the Bluetooth antenna 40 and the Wi-Fi antenna 10 do not affect each other can also be satisfied, so that a user of the terminal device has better user product experience.

The foregoing descriptions are merely preferred embodiments of this application, but are not intended to limit this application.

**Claims**

1. A Wi-Fi and Bluetooth combined antenna apparatus, comprising:

a Wi-Fi antenna (10);
a ground plate (20), wherein the Wi-Fi antenna (10) is disposed at an edge of the ground plate (20) and can generate a ground plate (20) current on the ground plate (20);
a perturbation unit (30), wherein the Wi-Fi antenna (10) and the perturbation unit (30) are respectively disposed at two opposite corner positions of the ground plate (20), the perturbation unit (30) is disposed at an edge of the ground plate (20) and is configured to generate a reverse current whose direction is opposite to an incoming wave direction of the ground plate (20) current after being excited by the ground plate (20) current, and a current zero point area is formed on the ground plate (20) after the reverse current is superimposed with the ground plate (20) current, and wherein the perturbation unit (30) comprises a radiator (31), a connecting portion (33), and a resistor-capacitor matching network (32), the radiator (31) is connected to the ground plate (20) through the connecting portion (33), and the resistor-capacitor matching network (32) is connected to an open end of the radiator (31) and is used for outputting the reverse current to the ground plate (20); and
a Bluetooth antenna (40), wherein the Bluetooth antenna (40) is disposed at a position of the edge of the ground plate (20) corresponding to the current zero point area.

2. The Wi-Fi and Bluetooth combined antenna apparatus according to claim 1, wherein there are two perturbation units (30), the two perturbation units (30) are disposed diagonally at two corner positions of the ground plate (20) relative to a center of the ground plate (20), and the Wi-Fi antenna (10) is disposed at another corner position of the ground plate (20).

3. The Wi-Fi and Bluetooth combined antenna apparatus according to claim 1, wherein resonant frequencies of two perturbation units (30) are the same.

4. The Wi-Fi and Bluetooth combined antenna apparatus according to claim 1, wherein resonant frequencies of two perturbation units (30) are different, and a difference between the resonant frequencies of resonant frequencies of the two perturbation units (30) is greater than 0 MHz and less than or equal to 100 MHz.

5. The Wi-Fi and Bluetooth combined antenna apparatus according to any one of the preceding claims, wherein the connecting portion (33) and the radiator (31) are integrally formed; or
the connecting portion (33) is a metal spring plate, one end of the metal spring plate is welded to the radiator (31), and the other end of the metal spring plate is welded to the ground plate (20).

6. The Wi-Fi and Bluetooth combined antenna apparatus according to any one of the preceding claims, wherein a length, a thickness, and a clearance of the radiator (31) to the ground plate (20) satisfy the following relationships:

$$10 \text{ mm} \leq L \leq 18 \text{ mm};$$

$$0.8 \text{ mm} \leq C \leq 1.2 \text{ mm};$$

and

$$0.8 \text{ mm} \leq D \leq 1.2 \text{ mm},$$

wherein L represents the length of the radiator (31), C represents the thickness of the radiator (31), and D represents the clearance of the radiator (31).

7. A configuration method for a Wi-Fi and Bluetooth combined antenna apparatus, comprising the following steps:

providing a Wi-Fi antenna (10) and a ground plate (20) and disposing the Wi-Fi antenna (10) at an edge of the ground plate (20);
providing a perturbation unit (30), and disposing the perturbation unit (30) at an edge of the ground plate (20), to enable the perturbation unit (30) and the Wi-Fi antenna (10) to be disposed at two opposite corner positions of the ground plate (20), wherein the perturbation unit (30) comprises a radiator (31), a connecting portion (33), and a resistor-capacitor matching network (32), the radiator (31) is connected to the ground plate (20) through the connecting portion (33), and the resistor-capacitor matching network (32) is connected to an open end of the radiator (31) and is used for outputting the reverse current to the ground plate (20);
obtaining a position of a current zero point area formed on the ground plate (20) after a ground plate (20) current generated on the ground plate (20) by the Wi-Fi antenna (10) is superimposed with a reverse current generated on the perturbation unit (30) by the ground plate (20) current; and
providing a Bluetooth antenna (40) and disposing the Bluetooth antenna (40) at a position of the edge of the ground plate (20) corresponding to the current zero point area.

8. A terminal device, comprising the Wi-Fi and Bluetooth combined antenna apparatus according to any one of claims 1 to 6.

**Patentansprüche**

1. Eine kombinierte Wi-Fi- und Bluetooth-Antennenvorrichtung, umfassend:

eine Wi-Fi-Antenne (10);
eine Grundplatte (20), wobei die Wi-Fi-Antenne (10) an einem Rand der Grundplatte (20) angeordnet ist und einen Grundplattenstrom (20) auf der Grundplatte (20) erzeugen kann;
eine Perturbationseinheit (30), wobei die Wi-Fi-Antenne (10) und die Perturbationseinheit (30) jeweils an zwei einander gegenüberliegenden Eckpositionen der Grundplatte (20) angeordnet sind, die Perturbationseinheit (30) an einem Rand der Grundplatte (20) angeordnet ist und dafür ausgelegt ist, nach Anregung durch den Grundplattenstrom (20) einen Gegenstrom zu erzeugen, dessen Richtung der Eintrittswellenrichtung des Grundplattenstroms (20) entgegengesetzt ist, und auf der Grundplatte (20) nach Überlagerung des Gegenstroms mit dem Grundplattenstrom (20) ein Strom-Nullpunktbereich gebildet wird, wobei die Perturbationseinheit (30) einen Strahler (31), einen Verbindungsabschnitt (33) und ein Widerstands-Kapazitäts-Anpassungsnetzwerk (32) umfasst, der Strahler (31) über den Verbindungsabschnitt (33) mit der Grundplatte (20) verbunden ist und das Widerstands-Kapazitäts-Anpassungsnetzwerk (32) mit einem offenen Ende des Strahlers (31) verbunden und zum Ausgeben des Gegenstroms an die Grundplatte (20) verwendet wird; und eine Bluetooth-Antenne (40), wobei die Bluetooth-Antenne (40) an einer Randposition der Grundplatte (20) angeordnet ist, die dem Strom-Nullpunktbereich entspricht.

2. Die kombinierte Wi-Fi- und Bluetooth-Antennenvorrichtung nach Anspruch 1, wobei zwei Perturbationseinheiten (30) vorhanden sind, die beiden Perturbationseinheiten (30) diagonal an zwei Eckeckenpositionen der Grundplatte (20) relativ zum Mittelpunkt der Grundplatte (20) angeordnet sind und die Wi-Fi-Antenne (10) an einer weiteren Eckposition der Grundplatte (20) angeordnet ist.

3. Die kombinierte Wi-Fi- und Bluetooth-Antennenvorrichtung nach Anspruch 1, wobei die Resonanzfrequenzen der beiden Perturbationseinheiten (30) gleich sind.

4. Die kombinierte Wi-Fi- und Bluetooth-Antennenvorrichtung nach Anspruch 1, wobei die Resonanzfrequenzen der beiden Perturbationseinheiten (30) unterschiedlich sind und der Unterschied zwischen den Resonanzfrequenzen der beiden Perturbationseinheiten (30) größer als 0 MHz und kleiner oder gleich 100 MHz ist.

5. Die kombinierte Wi-Fi- und Bluetooth-Antennenvorrichtung nach einem der vorstehenden Ansprüche, wobei der Verbindungsabschnitt (33) und der Strahler (31) einstückig ausgebildet sind; oder der Verbindungsabschnitt (33) eine Metallfederplatte ist, wobei ein Ende der Metallfederplatte an den Strahler (31) und das andere Ende an die Grundplatte (20) gelötet ist.

6. Wi-Fi- und Bluetooth-Kombinationsantennenvorrichtung nach einem der vorhergehenden Ansprüche, wobei Länge, Dicke und Abstand des Strahlers (31) zur Grundplatte (20) die folgenden Beziehungen erfüllen:

$$10 \text{ mm} \leq L \leq 18 \text{ mm};$$

$$0{,}8 \text{ mm} \leq C \leq 1{,}2 \text{ mm};$$

und

$$0{,}8 \text{ mm} \leq D \leq 1{,}2 \text{ mm},$$

wobei L die Länge des Strahlers (31) bezeichnet, C die Dicke des Strahlers (31) und D den Abstand des Strahlers (31) bezeichnet.

7. Konfigurationsverfahren für eine Wi-Fi- und Bluetooth-Kombinationsantennenvorrichtung, umfassend die folgenden Schritte:

Bereitstellen einer Wi-Fi-Antenne (10) und einer Grundplatte (20) und Anordnen der Wi-Fi-Antenne (10) an einem Rand der Grundplatte (20); Bereitstellen einer Störeinheit (30) und Anordnen der Störeinheit (30) an einem Rand der Grundplatte (20), sodass die Störeinheit (30) und die Wi-Fi-Antenne (10) an zwei gegenüberliegenden Eckpositionen der Grundplatte (20) angeordnet sind, wobei die Störeinheit (30) einen Strahler (31), einen Verbindungsabschnitt (33) und ein Widerstands-Kondensator-Abstimmnetzwerk (32) umfasst. Der Strahler (31) ist über den Verbindungsabschnitt (33) mit der Grundplatte (20) verbunden und das Widerstands-Kondensator-Abstimmnetzwerk (32) ist mit einem offenen Ende des Strahlers (31) verbunden und dient zur Ausgabe des Gegenstroms zur Grundplatte (20); Ermitteln der Position eines Strom-Nullpunktbereichs, der auf der Grundplatte (20) entsteht, nachdem ein von der Wi-Fi-Antenne (10) erzeugter Grundplattenstrom (20) mit einem von der Störeinheit (30) erzeugten Gegenstrom überlagert wurde; und Bereitstellen einer Bluetooth-Antenne (40) und Anordnen der Bluetooth-Antenne (40) an einer dem Strom-Nullpunktbereich entsprechenden Randposition der Grundplatte (20).

8. Endgerät, das die Wi-Fi- und Bluetooth-Kombinationsantennenvorrichtung nach einem der Ansprüche 1 bis 6 umfasst.

**Revendications**

1. Un dispositif d'antenne combinée Wi-Fi et Bluetooth, comprenant :

une antenne Wi-Fi (10);

une plaque de masse (20), l'antenne Wi-Fi (10) étant disposée sur un bord de la plaque de masse (20) et pouvant générer un courant de plaque de masse (20) sur la plaque de masse (20);

une unité de perturbation (30), l'antenne Wi-Fi (10) et l'unité de perturbation (30) étant respectivement disposées à deux coins opposés de la plaque de masse (20), l'unité de perturbation (30) étant placée sur un bord de la plaque de masse (20) et conçue pour générer un courant inverse dont la direction est opposée à la direction de l'onde incidente du courant de plaque de masse (20) après excitation par le courant de la plaque de masse (20), une zone de point zéro de courant étant formée sur la plaque de masse (20) après superposition du courant inverse avec le courant de la plaque de masse (20), et l'unité de perturbation (30) comprenant un radiateur (31), une partie de connexion (33) et un réseau d'adaptation résistance-capacité (32), le radiateur (31) étant relié à la plaque de masse (20) par la partie de connexion (33), et le réseau d'adaptation résistance-capacité (32) étant relié à une extrémité ouverte du radiateur (31) et utilisé pour délivrer le courant inverse à la plaque de masse (20); et

une antenne Bluetooth (40), l'antenne Bluetooth (40) étant disposée à un emplacement du bord de la plaque de masse (20) correspondant à la zone de point zéro de courant.

2. Dispositif d'antenne combinée Wi-Fi et Bluetooth selon la revendication 1, **caractérisé en ce que** deux unités de perturbation (30) sont prévues, les deux unités de perturbation (30) étant disposées en diagonale à deux coins de la plaque de masse (20) par rapport au centre de la plaque de masse (20), et l'antenne Wi-Fi (10) est disposée à un autre coin de la plaque de masse (20).

3. Dispositif d'antenne combinée Wi-Fi et Bluetooth selon la revendication 1, dans lequel les fréquences de résonance des deux unités de perturbation (30) sont identiques.

4. Dispositif d'antenne combinée Wi-Fi et Bluetooth selon la revendication 1, dans lequel les fréquences de résonance des deux unités de perturbation (30) sont différentes, et l'écart entre les fréquences de résonance des deux unités de perturbation (30) est supérieur à 0 MHz et inférieur ou égal à 100 MHz.

5. Dispositif d'antenne combinée Wi-Fi et Bluetooth selon l'une quelconque des revendications précédentes, dans lequel la partie de connexion (33) et le radiateur (31) sont fabriqués d'un seul tenant; ou la partie de connexion (33) est une plaque-ressort métallique, une extrémité de la plaque-ressort métallique étant soudée au radiateur (31), et l'autre extrémité étant soudée à la plaque de masse (20).

6. Le dispositif d'antenne combinée Wi-Fi et Bluetooth selon l'une quelconque des revendications précédentes, dans lequel la longueur, l'épaisseur et l'espace libre du radiateur (31) par rapport à la plaque de masse (20) satisfont les relations suivantes :

$$10 \text{ mm} \leq L \leq 18 \text{ mm} ;$$

$$0,8 \text{ mm} \leq C \leq 1,2 \text{ mm} ;$$

et

$$0,8 \text{ mm} \leq D \leq 1,2 \text{ mm},$$

où L représente la longueur du radiateur (31), C représente l'épaisseur du radiateur (31), et D représente l'espace libre du radiateur (31).

7. Procédé de configuration d'un dispositif d'antenne combinée Wi-Fi et Bluetooth, comprenant les étapes suivantes :

fournir une antenne Wi-Fi (10) et une plaque de masse (20) et disposer l'antenne Wi-Fi (10) en bordure de la plaque de masse (20) ;

fournir une unité de perturbation (30) et disposer l'unité de perturbation (30) en bordure de la plaque de masse (20), de façon à permettre que l'unité de perturbation (30) et l'antenne Wi-Fi (10) soient positionnées sur deux coins opposés de la plaque de masse (20), l'unité de perturbation (30) comprenant un radiateur (31), une partie de connexion (33) et un réseau d'adaptation résistance-condensateur (32), le radiateur (31) étant relié à la plaque de masse (20) via la partie de connexion (33), et le réseau d'adaptation résistance-condensateur (32) étant connecté à une extrémité ouverte du radiateur (31) et utilisé pour fournir le courant inverse à la plaque de masse (20) ;

obtenir la position d'une zone de point zéro de courant formée sur la plaque de masse (20) après que le courant de la plaque de masse (20) généré par l'antenne Wi-Fi (10) sur la plaque de masse (20) est superposé avec un courant inverse généré sur l'unité de perturbation (30) par le courant de la plaque de masse (20) ; et

fournir une antenne Bluetooth (40) et disposer l'antenne Bluetooth (40) à un emplacement en bordure de la plaque de masse (20) correspondant à la zone de point zéro de courant.

**8.** Dispositif terminal, comprenant un dispositif d'antenne combinée Wi-Fi et Bluetooth selon l'une quelconque des revendications 1 à 6.

FIG. 1

EP 4 290 693 B1

FIG. 2

14

FIG. 3

FIG. 4

FIG. 5

FIG. 6

FIG. 7

FIG. 8

FIG. 9

FIG. 10

FIG. 11

FIG. 12

FIG. 13

FIG. 14

Provide a Wi-Fi antenna and a ground plate, and dispose the Wi-Fi antenna at an edge of the ground plate ⟋ S1

Provide a perturbation unit, and dispose the perturbation unit at an edge of the ground plate, to enable the perturbation unit and the Wi-Fi antenna to be disposed opposite to each other ⟋ S2

Obtain a position of a current zero point area formed on the ground plate after a ground plate current generated on the ground plate by the Wi-Fi antenna is superimposed with a reverse current generated on the ground plate by the perturbation unit ⟋ S3

Provide a Bluetooth antenna, and dispose the Bluetooth antenna at a position of the edge of the ground plate corresponding to the current zero point area ⟋ S4

FIG. 15

**EP 4 290 693 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111091425
- US 2016301145 A1
- US 2009027286 A1
- US 2008007468 A1